(19) Europäisches Patentamt
European Patent Office
Office européen des brevets

(11) EP 4 023 423 A1

(12) EUROPEAN PATENT APPLICATION
published in accordance with Art. 153(4) EPC

(43) Date of publication:
**06.07.2022 Bulletin 2022/27**

(21) Application number: **20858051.4**

(22) Date of filing: **20.08.2020**

(51) International Patent Classification (IPC):
***B29K 101/10*** *(2006.01)* ***B29K 105/08*** *(2006.01)*
***B29C 64/118*** *(2017.01)* ***B29C 64/259*** *(2017.01)*
***B29C 64/314*** *(2017.01)* ***B29C 70/16*** *(2006.01)*
***B29C 70/40*** *(2006.01)* ***B33Y 40/00*** *(2020.01)*
***B33Y 70/00*** *(2020.01)*

(52) Cooperative Patent Classification (CPC):
**B29C 64/118; B29C 64/259; B29C 64/314; B29C 70/16; B29C 70/40; B33Y 40/00; B33Y 70/00**

(86) International application number:
**PCT/JP2020/031383**

(87) International publication number:
**WO 2021/039557 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2019 JP 2019154329**

(71) Applicant: **MITSUBISHI GAS CHEMICAL COMPANY, INC.**
**Chiyoda-ku**
**Tokyo 100-8324 (JP)**

(72) Inventors:
- **ITO, Hiroto**
**Kanagawa 222-0033 (JP)**
- **IKIZAKURA, Kazuya**
**Kanagawa 222-0033 (JP)**
- **HIROOKA, Nobuki**
**Kanagawa 222-0033 (JP)**

(74) Representative: **Vossius & Partner Patentanwälte Rechtsanwälte mbB**
**Siebertstraße 3**
**81675 München (DE)**

# (54) FILAMENT FOR 3D PRINTER, WOUND BODY, METHOD FOR PRODUCING FILAMENT FOR 3D PRINTER, AND METHOD FOR PRODUCING SHAPED ARTICLE

(57) Provided are a novel filament for a three-dimensional printer, a winding, a method for producing a filament for a three-dimensional printer, and a method for producing a formed article. The filament for a three-dimensional printer includes a continuous reinforcing fiber impregnated with a thermosetting resin composition containing a thermosetting resin, the filament having a characteristic of being solid at 25°C.



Processed by Luminess, 75001 PARIS (FR)

## Description

### Technical Field

The present invention relates to a filament for a three-dimensional (3D) printer. More particularly, the present invention relates to a filament for a 3D printer, the filament used for producing a 3D shaped object in a 3D printer. The present invention also relates to a winding in which a filament for a 3D printer is wound around a core material, a method for producing a filament for a 3D printer, and a method for producing a formed article.

### Background Art

A 3D printer is a type of rapid prototyping (3D shaping machine) and is a 3D shaping printer that produces 3D shaped objects made of plastic or the like using 3D data, such as those of CAD or CG, created on a computer as a design drawing.

A shaping method by a material extrusion deposition method is known as one of shaping methods by a 3D printer. The principle of the material extrusion deposition method is a method in which a shaping material is fluidized by means, such as melting with heat, then the melted material is discharged from a head nozzle to a predetermined position based on 3D data, and the material is repeatedly laminated to perform 3D shaping.

In the material extrusion deposition method, such a material as a filament-shaped material made of a continuous reinforcing fiber impregnated with a thermoplastic resin is used as the shaping material (see Patent Documents 1 and 2).

### Citation List

#### Patent Documents

Patent Document 1: JP 2016-518267 T
Patent Document 2: JP 2016-520459 T

### Summary of Invention

#### Technical Problem

For a material for a filament for a 3D printer, a thermoplastic resin has been used for reasons, such as ease of 3D shaping in a 3D printer, and a filament for a 3D printer, the filament formed using a thermosetting resin, has not been known until now.

Thus, an object of the present invention is to provide a novel filament for a 3D printer, a winding, a method for producing a filament for a 3D printer, and a method for producing a formed article.

#### Solution to Problem

The present invention provides the following.

(1) A filament for a three-dimensional printer, the filament includes a continuous reinforcing fiber impregnated with a thermosetting resin composition containing a thermosetting resin, the filament having a characteristic of being solid at 25°C.
(2) The filament for a three-dimensional printer according to (1), having a tack value from 0 to 3 kPa, the tack value being measured with a probe pressing load of 20 kPa at 23°C.
(3) The filament for a three-dimensional printer according to (1) or (2), wherein a tack value of 3 kPa or higher, the tack value being measured with a probe pressing load of 20 kPa at any temperature from 40 to 250°C.
(4) The filament for a three-dimensional printer according to any one of (1) to (3), wherein the continuous reinforcing fiber has a volume content from 10 to 80 vol.% in the filament for a three-dimensional printer.
(5) The filament for a three-dimensional printer according to any one of (1) to (4), wherein the continuous reinforcing fiber has the number of single fibers of 100 or more.
(6) The filament for a three-dimensional printer according to any one of (1) to (5), wherein the continuous reinforcing fiber is at least one selected from a carbon fiber, a glass fiber, and an aramid fiber.
(7) The filament for a three-dimensional printer according to any one of (1) to (6), wherein the thermosetting resin

has a weight average molecular weight from 200 to 50000.

(8) The filament for a three-dimensional printer according to any one of (1) to (7), wherein the thermosetting resin has a softening point of 40 to 250°C.

(9) The filament for a three-dimensional printer according to any one of (1) to (8), wherein the thermosetting resin is solid at 25°C.

(10) The filament for a three-dimensional printer according to any one of (1) to (9), wherein the thermosetting resin contains at least one selected from a cyanate resin, a bismaleimide triazine resin, a phenolic resin, a benzoxazine resin, an epoxy resin, an unsaturated polyester resin, and a diallyl phthalate resin.

(11) The filament for a three-dimensional printer according to any one of claims 1 to 10, wherein a shape of a cross sectional surface in a direction orthogonal to a length direction of the filament is a circular shape, a flattened shape, or an elliptical shape.

(12) A winding, in which the filament for a three-dimensional printer described in any one of (1) to (11) is wound around a core material.

(13) A method for producing the filament for a three-dimensional printer described in any one of (1) to (11), the method including impregnating a continuous reinforcing fiber with a thermosetting resin composition containing a thermosetting resin.

(14) A method for producing a formed article, the method including allowing the filament for a three-dimensional printer described in any one of (1) to (11) to be discharged from a nozzle of a three-dimensional printer onto a substrate, so as to produce a three-dimensional shaped object, and heating the three-dimensional shaped object.

## Advantageous Effects of Invention

The present invention can provide the novel filament for a 3D printer, the winding, the method for producing the filament for a 3D printer, and the method for producing the formed article.

## Description of Embodiments

Contents of the present invention will be described in detail below. Although the description of the component requirements described below may be made based on an exemplary embodiment of the present invention, the present invention is not limited to such an embodiment. In addition, in the present specification, a numerical range described using "from ... to ..." or "of ... to ..." means a numerical range including the numerical values described before and after "to" as the lower limit and the upper limit.

## Filament for three-dimensional printer

A filament for a three-dimensional (3D) printer of the present invention is a solid material at 25°C and includes a continuous reinforcing fiber impregnated with a thermosetting resin composition containing a thermosetting resin.

The filament for a 3D printer is basically an ink for a 3D printer, which is to be discharged from a nozzle of a 3D printer. The filament for a three-dimensional printer of the present invention contains a thermosetting resin and thus enables production of a formed article with excellent mechanical properties, such as strength, using a 3D printer. In addition, moderately promoting a curing reaction enables the filament for a 3D printer of the present invention to be less tacky at ordinary temperature (e.g., from 20 to 30°C). Thus, this can prevent contamination (e.g., that in a transport roller), nozzle clogging, and the like in a 3D printer and thus can simplify the maintenance effort and the like of the 3D printer.

The filament for a 3D printer of the present invention has a tack value ($T_{23}$) measured with a probe pressing load of 20 kPa at 23°C preferably from 0 to 3 kPa, more preferably from 0 to 2 kPa, and even more preferably from 0 to 1 kPa. With the tack value at 23°C in the above ranges, the filament for a 3D printer can be less tacky at ordinary temperature, effectively preventing contamination, nozzle clogging, and the like in a 3D printer. Furthermore, an effect of eliminating the need for a process paper during winding of the filament can also be expected.

The filament for a 3D printer of the present invention has a tack value, measured with a probe pressing load of 20 kPa at 35°C, of preferably from 0 to 3 kPa, more preferably from 0 to 2 kPa, and even more preferably from 0 to 1 kPa. With the tack value at 35°C in the above ranges, the filament for a 3D printer has excellent storage properties.

The filament for a 3D printer of the present invention has a tack value measured with a probe pressing load of 20 kPa at any temperature from 40 to 250°C of preferably 3 kPa or higher, more preferably 4 kPa or higher, and even more preferably 5 kPa or higher. According to this aspect, the filament for a 3D printer can be expected to have effects of improved printability and also improved interlayer strength of the shaped object. In addition, for the reason of enabling further improvement of printability and interlayer strength of a shaped object, the filament for a 3D printer of the present invention has a tack value measured with a probe pressing load of 20 kPa at 100°C or 150°C (preferably at 100°C) of preferably 3 kPa or higher, more preferably 4 kPa or higher, and even more preferably 5 kPa or higher.

In the present specification, the value of the tack value of the filament for a 3D printer is an adhesion peak value measured by a probe tack test method. The probe tack test method is a method for measuring force required to peel off a gauge head (probe) having a certain ground contact area at a certain rate after the gauge head is pressed with a certain load for a certain time. The peak adhesion value is a maximum value of resistance generated when the contact surface between the probe and the sample is peeled off and is a value obtained by a probe tack test performed under the conditions described below.

Test conditions

Probe diameter: 10 mm in diameter
Probe pressing load: 20 kPa
Probe pressing time: 30 seconds
Probe pressing rate: 30 mm/min
Probe lifting rate: 10 mm/min

. Procedures

1) Aligned filaments are fixed to a sample stage adjusted to a predetermined temperature. When the size of the filament is smaller than the probe diameter, a plurality of filaments is aligned without gaps to have a size of 10 mm x 10 mm and fixed to the sample stage.
2) A probe is pressed against the filament on the sample stage at a pressing rate of 30 mm/min to apply a load of 20 kPa and kept pressing for 30 seconds.
3) The probe is lifted at a lifting rate of 10 mm/min.
4) A maximum value of the adhesion when the probe is lifted is taken as the adhesion peak, and an average value of the adhesion peak obtained by measuring a total of three times is taken as the tack value.

The filament for a 3D printer has an elastic modulus preferably of 10 to 700 MPa. With an elastic modulus in the above range, the filament for a 3D printer provides good 3D shaping properties in a 3D printer and further provides excellent storage properties as a winding. The lower limit of the elastic modulus is preferably 15 MPa or higher, more preferably 50 MPa or higher, and even more preferably 100 MPa or higher. The upper limit of the elastic modulus is preferably 650 MPa or lower, more preferably 600 MPa or lower, and even more preferably 550 MPa or lower.

The total volume content of the continuous reinforcing fiber and the thermosetting resin in the filament for a 3D printer is preferably 70% or higher, more preferably 80% or higher, even more preferably 90% or higher, still more preferably 95% or higher, and particularly preferably 99% or higher.

The thermosetting resin contained in the filament for a 3D printer is preferably in an uncured state. According to this aspect, the filament for a 3D printer provides good 3D shaping properties in a 3D printer. In the present specification, the uncured state of the thermosetting resin means a state before the curing of the thermosetting resin is fully completed and includes not only a completely uncured state but also a semi-cured state (partially cured state) where the curing (cross-linking) reaction has progressed to the extent that the reaction has not been fully completed.

Examples of the form of the filament for a 3D printer include a fiber shape, a tape shape, a rope shape, and a braid shape.

The shape of a cross sectional surface in the direction orthogonal to the length direction in the filament for a 3D printer is preferably a circular shape, a flattened shape, or an elliptical shape, and more preferably a circular or elliptical shape. Having the circular, flattened, or elliptical shape in cross sectional surface, the filament for a 3D printer can prevent fiber breakage or the like due to pressure of the nozzle pressing when discharged from the nozzle of a 3D printer and facilitates production of a 3D shaped object excellent in various properties, such as mechanical properties. The shape of the cross-sectional surface in the direction orthogonal to the length direction in the filament can be a shape other than those described above (e.g., an indefinite shape or a square).

Continuous reinforcing fiber

The filament for a 3D printer of the present invention contains a continuous reinforcing fiber. In the present specification, the continuous reinforcing fiber means a reinforcing fiber having an average fiber length of 30 mm or longer and is preferably a reinforcing fiber having an average fiber length of 50 mm or longer. The average fiber length of the

continuous reinforcing fiber is not particularly limited, but from the viewpoint of excellent molding processability, the average fiber length is preferably from 1 to 20000 m, more preferably from 100 to 10000 m, and even more preferably from 1000 to 7000 m. Unless otherwise stated, the length of the fiber in the present invention is weight average fiber length.

The volume content of the continuous reinforcing fiber in the filament for a 3D printer is preferably from 10 to 80 vol.%, more preferably from 20 to 70 vol.%, and even more preferably from 40 to 65 vol.%. With the volume content of the continuous reinforcing fiber in the above range, the filament for a 3D printer can provide a formed article with excellent mechanical strength and further can be expected to have effects of improving printability and improving interlayer strength of the resulting 3D shaped object.

The volume content of the continuous reinforcing fiber in the filament for a 3D printer is a value calculated from the following equation.

$$\text{Volume content of continuous reinforcing fiber} = (\text{volume of continuous reinforcing fiber contained in filament for 3D printer}/\text{volume of filament for 3D printer}) \times 100$$

The number of single fibers in the continuous reinforcing fiber used in the filament for a 3D printer is preferably 100 or more, more preferably from 100 to 60000, and even more preferably from 100 to 24000. That is, the continuous reinforcing fiber used in the filament for a 3D printer is preferably a fiber bundle in which at least 100 single fibers are bundled. With the number of single fibers in the continuous reinforcing fiber of 100 or more, the filament for a 3D printer can prevent fiber breakage or the like due to pressure of the nozzle pressing when discharged from the nozzle of a 3D printer and facilitates production of a 3D shaped object excellent in various properties, such as mechanical properties. In addition, with the number of single fibers in the continuous reinforcing fiber of 100 to 24000, the filament for a 3D printer can also be expected to have an effect of applying an effective fiber orientation to a fine portion of a 3D shaped object in addition to the effects described above. Furthermore, with the number of fibers of more than 6000, the filament for a 3D printer can also be expected to have an effect of enabling the 3D shaping time to be shortened. In addition, the fiber bundle may be twisted. According to this aspect, fiber twist due to the difference between the inner diameter and the outer diameter at the curved portion can be corrected with respect to the trajectory of the 3D print, and this facilitates obtaining a 3D shaped object superior in various properties, such as mechanical properties.

The average fiber diameter of the single fiber is preferably 3 μm or more, more preferably 4 μm or more, and even more preferably 5 μm or more. In addition, the average fiber diameter is preferably 50 μm or less, more preferably 20 μm or less, and even more preferably 12 μm or less. The average fiber diameter of the single fiber is an average value of the diameter of the single fiber.

Examples of the type of continuous reinforcing fiber include inorganic fibers, such as glass fibers, carbon fibers, alumina fibers, boron fibers, ceramic fibers, and metal fibers (such as steel fibers); and organic fibers, such as plant fibers (including kenaf and bamboo fibers), aramid fibers, polyoxymethylene fibers, aromatic polyamide fibers, polyparaphenylene benzobisoxazole fibers, and ultra-high molecular weight polyethylene fibers. Among these, the continuous reinforcing fiber is preferably at least one selected from carbon fibers, glass fibers, and aramid fibers, and more preferably at least one selected from carbon fibers and glass fibers. In particular, carbon fibers have excellent characteristics of being lightweight but having high strength and a high elastic modulus and thus are preferably used.

Examples of the carbon fiber include polyacrylonitrile (PAN)-based carbon fibers, petroleum/coal pitch-based carbon fibers, rayon-based carbon fibers, cellulose-based carbon fibers, lignin-based carbon fibers, phenolic-based carbon fibers, and vapor phase growth-based carbon fibers.

The continuous reinforcing fiber may be treated with a treatment agent. Examples of the treatment agent include sizing agents and surface treatment agents. For example, the treatment agent is at least one selected from epoxy resins, urethane resins, silane coupling agents, water-insoluble polyamide resins, and water-soluble polyamide resins. In addition, for the treatment agent, those described in paragraphs [0093] and [0094] of JP 4894982 B can also be used, the contents of which are incorporated by reference into the present specification. The amount of the treatment agent is preferably from 0.001 to 1.5 mass% of the amount of the continuous reinforcing fiber, more preferably from 0.1 to 1.2 mass%, and even more preferably from 0.5 to 1.1 mass%.

Thermosetting resin composition

The thermosetting resin composition used in the filament for a 3D printer of the present invention contains a thermosetting resin. The thermosetting resin composition is a matrix of the filament for a 3D printer. The content of the thermosetting resin in the thermosetting resin composition is preferably 50 mass% or higher, more preferably 60 mass% or higher, even more preferably 70 mass% or higher, and particularly preferably 80 mass% or higher. In addition, the content of the thermosetting resin in the thermosetting resin composition can be 90 mass% or higher, 95 mass% or higher, and 99 mass% or higher. In addition, the thermosetting resin contained in the thermosetting resin composition

is preferably a solid thermosetting resin at 25°C.

In the present specification, "solid at 25°C" refers to those with a viscosity at 25°C of more than 10000 mPa·s.

At any temperature of 40 to 250°C, the melt viscosity of the thermosetting resin is preferably from 1 to 8500 mPa·s, more preferably from 1 to 5000 mPa·s, and even more preferably from 1 to 3000 mPa·s.

The weight average molecular weight of the thermosetting resin is preferably from 200 to 50000, more preferably from 200 to 40000, even more preferably from 200 to 30000, and still more preferably from 200 to 25000. In addition, the softening point of the thermosetting resin is preferably from 40 to 250°C, more preferably from 70 to 250°C, and even more preferably from 80 to 250°C.

Examples of the type of thermosetting resin include cyanate resins, bismaleimide triazine resins, phenolic resins, benzoxazine resins, unsaturated polyester resins, diallyl phthalate resins, maleimide resins, epoxy resins, vinyl ester resins, phenoxy resins, alkyd resins, urethane resins, urethane acrylate resins, ureic resins, and melamine resins, and preferred among these are a cyanate resin, a bismaleimide triazine resin, a phenolic resin, a benzoxazine resin, an epoxy resin, and an unsaturated polyester resin. Among these, from the viewpoint of generating less gas during the curing reaction, the thermosetting resin is preferably a cyanate resin, a bismaleimide triazine resin, a benzoxazine resin, and an epoxy resin, and more preferably a cyanate resin and a bismaleimide triazine resin. In addition, from the viewpoint of ease of adjusting the curing rate and the curing temperature range, the thermosetting resin is preferably a diallyl phthalate resin and an unsaturated polyester resin.

Among the thermosetting resins described above, only a single thermosetting resin may be used, or two or more thermosetting resins may be mixed and used.

Examples of the cyanate resin include those represented by Formula (1):

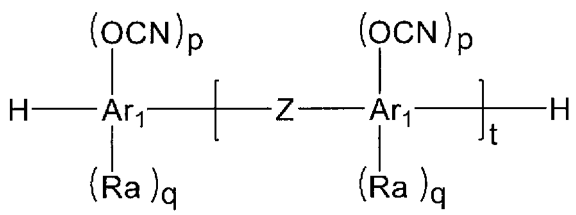

(1)

In Formula (1), An represents a benzene ring, a naphthalene ring, or a two benzene rings bonded with a single bond. A plurality of $Ar_1$'s when contained may be identical to or different from each other. Each Ra independently represents a hydrogen atom, an alkyl group having from 1 to 6 carbons, an aryl group having from 6 to 12 carbons, an alkoxyl group having from 1 to 4 carbons, and a group in which an alkyl group having from 1 to 6 carbons and an aryl group having from 6 to 12 carbons are bonded. The aromatic ring in Ra may have a substituent, and the substituent in $Ar_1$ and Ra can be at any selected position. p represents the number of the cyanato group attached to An and each is independently an integer from 1 to 3. q represents the number of Ra attached to $Ar_1$ and is 4 - p when $Ar_1$ is a benzene ring, 6 - p when $Ar_1$ is a naphthalene ring, and 8 - p when $Ar_1$ is two benzene rings bonded with a single bond. t represents an average number of repetitions and is an integer from 0 to 50, and the cyanate resin may be a mixture of compounds with different t. Z represents, or Z's when a plurality is contained each independently represents any of a single bond, a divalent organic group having from 1 to 50 carbons (a hydrogen atom may be replaced by a hetero atom), a divalent organic group having from 1 to 10 nitrogens (e.g., -N-R-N-, where R represents an organic group), a carbonyl group (-CO-), a carboxy group (-C(=O)O-), a carbonyl dioxide group (-OC(=O)O-), a sulfonyl group ($-SO_2-$), a divalent sulfur atom, or a divalent oxygen atom.

The alkyl group in Ra of Formula (1) may have any of a linear or branched chain structure and a ring structure (e.g., such as a cycloalkyl group). In addition, the hydrogen atom in the alkyl group and the aryl group in Ra in Formula (1) may be replaced by a halogen atom, such as a fluorine atom or a chlorine atom; an alkoxyl group, such as a methoxy group or a phenoxy group; a cyano group; or the like. Specific examples of the alkyl group include, but are not limited to, a methyl group, an ethyl group, a propyl group, an isopropyl group, an n-butyl group, an isobutyl group, a tert-butyl group, an n-pentyl group, a 1-ethylpropyl group, a 2,2-dimethylpropyl group, a cyclopentyl group, a hexyl group, a cyclohexyl group, and a trifluoromethyl group. Specific examples of the aryl group include, but are not limited to, a phenyl group, a xylyl group, a mesityl group, a naphthyl group, a phenoxyphenyl group, an ethylphenyl group, an o-, m-, or p-fluorophenyl group, a dichlorophenyl group, a dicyanophenyl group, a trifluorophenyl group, a methoxyphenyl group, and an o-, m-, or p-tolyl group. Examples of the alkoxyl group include, but are not limited to, a methoxy group, an ethoxy group, a propoxy group, an isopropoxy group, an n-butoxy group, an isobutoxy group, and a tert-butoxy group.

Specific examples of the divalent organic group having from 1 to 50 carbons in Z of Formula (1) include a methylene group, an ethylene group, a trimethylene group, a cyclopentylene group, a cyclohexylene group, a trimethylcyclohexylene group, a biphenylylmethylene group, a dimethylmethylene-phenylene-dimethylmethylene group, a fluorendiyl group, and a phthalidodiyl group. The hydrogen atom in the divalent organic group may be replaced by a halogen

atom, such as a fluorine atom or a chlorine atom; an alkoxyl group, such as a methoxy group or a phenoxy group; a cyano group; or the like.

Examples of the divalent organic group having from 1 to 10 nitrogens in Z of Formula (1) include an imino group and a polyimide group.

Examples of the organic group of Z in Formula (1) also include those represented by Formula (2) or Formula (3) below:

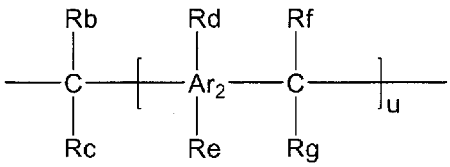

(2)

In Formula (2), $Ar_2$ represents a benzenetetrayl group, a naphthalenetetrayl group, or a biphenyltetrayl group, and when u is 2 or more, $Ar_2$ may be identical to or different from each other. Rb, Rc, Rf, and Rg are each independently a hydrogen atom, an alkyl group having from 1 to 6 carbons, an aryl group having from 6 to 12 carbons, or an aryl group having at least one trifluoromethyl group or phenolic hydroxy group. Rd and Re each independently represents a hydrogen atom, an alkyl group having from 1 to 6 carbons, an aryl group having from 6 to 12 carbons, an alkoxyl group having from 1 to 4 carbons, or a hydroxy group. u represents an integer from 0 to 5.

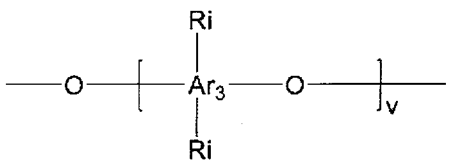

(3)

In Formula (3), $Ar_3$ represents a benzenetetrayl group, a naphthalenetetrayl group, or a biphenyltetrayl group, and when v is 2 or more, $Ar_3$ may be identical to or different from each other. Ri and Rj each independently represent a hydrogen atom, an alkyl group having from 1 to 6 carbons, an aryl group having from 6 to 12 carbons, a benzyl group, an alkoxyl group having from 1 to 4 carbons, or an aryl group in which at least one hydroxy group, trifluoromethyl group, or cyanato group is replaced. v represents an integer from 0 to 5.

Furthermore, examples of Z in Formula (1) include divalent groups represented by the formulas below.

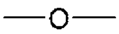
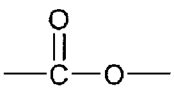
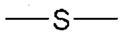
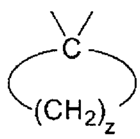
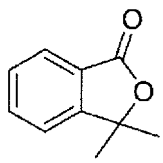

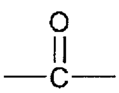
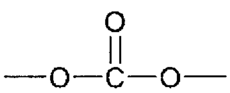
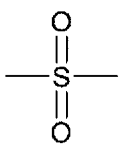
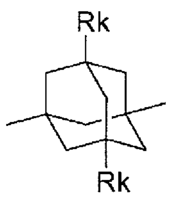
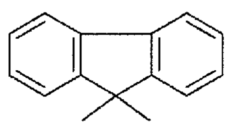

In the formula above, z represents an integer of 4 to 7. Each Rk independently represents a hydrogen atom or an alkyl group having from 1 to 6 carbons.

Specific examples of $Ar_2$ of Formula (2) and $Ar_3$ of Formula (3) include a 1,4-phenylene group, a 1,3-phenylene group, a 4,4'-biphenylene group, a 2,4'-biphenylene group, a 2,2'-biphenylene group, a 2,3'-biphenylene group, a 3,3'-biphenylene group, a 3,4'-biphenylene group, a 2,6-naphthylene group, a 1,5-naphthylene group, a 1,6-naphthylene group, a 1,8-naphthylene group, a 1,3-naphthylene group, and a 1,4-naphthylene group.

Rb, Rc, Rd, Re, Rf, and Rg in Formula (2), and the alkyl group and aryl group in Ri and Rj in Formula (3) are synonymous with the alkyl group and aryl group in Ra in Formula (1) above.

Examples of the cyanate resin include phenol novolac type cyanate resins, biphenyl aralkyl type cyanate resins, bisphenol A type cyanate resins, diallylbisphenol A type cyanate resins, bisphenol E type cyanate resins, bisphenol F type cyanate resins, bisphenol M type cyanate resins, naphthol aralkyl type cyanate resins, naphthylene ether type cyanate resins, xylene type cyanate resins, trisphenol methane type cyanate resins, and adamantane skeleton type cyanate resins. The cyanate resin is preferably a naphthol aralkyl type cyanate resin, a novolac type cyanate resin, and a biphenyl aralkyl type cyanate resin, and more preferably a naphthol aralkyl cyanate resin and a novolac type cyanate resin.

The weight average molecular weight of the cyanate resin is preferably from 200 to 25000, more preferably from 250 to 20000, and even more preferably from 300 to 15000.

Examples of the cyanate resin include CYTESTER (trade name) TA-1500 available from Mitsubishi Gas Chemical Company, Inc. and PRIMASET PT-15 and PT-30 available from Lonza Japan Ltd.

Examples of the bismaleimide triazine resin include those obtained by cross-linking a bismaleimide compound and a cyanate ester compound. Examples of the bismaleimide compound include bis(4-maleimidophenyl)methane, 2,2-bis {4-(4-maleimidophenoxy)-phenyl}propane, bis(3,5-dimethyl-4-maleimidophenyl)methane, bis(3-ethyl-5-methyl-4-maleimidophenyl)methane, bis(3,5-diethyl-4-maleimidophenyl)methane, and prepolymers of these maleimide compounds. Examples of the cyanate ester compound include cyanate resins described above.

The weight average molecular weight of the bismaleimide triazine resin is preferably from 200 to 25000, more preferably from 250 to 20000, and even more preferably from 300 to 15000.

Examples of the bismaleimide triazine resin include BT-2160 and BT-2170 available from Mitsubishi Gas Chemical Company, Inc.

Examples of the diallyl phthalate resin include IsoDAP, DAP A, and DAP S available from Osaka Soda Co., Ltd.

The thermosetting resin composition can further contain a curing agent component or a catalyst component (hereinafter also referred to as a curing agent). The type of curing agent can be appropriately selected according to the type of thermosetting resin.

Examples of the curing agent when an epoxy resin is used as the thermosetting resin include imidazole compounds and their derivatives; tertiary amine compounds; quaternary ammonium compounds; and phosphorus-based compounds, such as triphenylphosphine. One of these may be used alone, or two or more may be used in combination. Among these, from the viewpoint of heat resistance, glass transition temperature, and storage stability, an imidazole compound and its derivative, or a phosphorus-based compound may be used. Examples of the imidazole compound include methylimidazole, phenylimidazole, and isocyanate-masked imidazoles (e.g., such as an addition reaction product of a hexamethylene diisocyanate resin and 2-ethyl-4-methylimidazole), and an isocyanate-masked imidazole is preferred.

Examples of the curing agent when a cyanate resin is used as the thermosetting resin include imidazole compounds and their derivatives; carboxylate salts, such as those of manganese, cobalt, or zinc; and organometallic compounds, such as acetylacetone complexes of a transition metal, such as those of manganese, cobalt, or zinc. One of these may be used alone, or two or more may be used in combination. Among these, from the viewpoint of heat resistance, glass transition temperature, and storage stability, an organic metal compound is preferred.

Examples of the curing agent when a bismaleimide triazine resin is used as the thermosetting resin include acidic catalysts, such as p-toluenesulfonic acid; amine compounds, such as triethylamine, pyridine, and tributylamine; imidazole compounds, such as methylimidazole, phenylimidazole, and isocyanate-masked imidazoles (e.g., such as an addition reaction product of a hexamethylene diisocyanate resin and 2-ethyl-4-methylimidazole); tertiary amine compounds; quaternary ammonium compounds; phosphorus-based compounds, such as triphenylphosphine; organic peroxides, such as dicumyl peroxide, 2,5-dimethyl-2,5-bis(t-butylperoxy)hexyne-3,2,5-dimethyl-2,5-bis(t-butylperoxy)hexane, t-butylperoxyisopropyl monocarbonate, and $\alpha,\alpha'$-bis(t-butylperoxy)diisopropylbenzene; and carboxylate salts, such as those of manganese, cobalt, or zinc. One of these may be used alone, or two or more may be used in combination. Among these, from the viewpoint of heat resistance, glass transition temperature, and storage stability, an imidazole compound, an organic peroxide, or a carboxylate salt is preferred. From the viewpoint of heat resistance, glass transition temperature, an elastic modulus, and a thermal expansion coefficient, an imidazole compound and an organic peroxide are preferably used in combination. In addition, among the organic peroxides, $\alpha,\alpha'$-bis(t-butylperoxy)diisopropylbenzene is particularly preferred.

Examples of the curing agent when a benzoxazine resin is used as the thermosetting resin include imidazole-based curing accelerators, phosphorus-based curing accelerators, and amine-based curing accelerators. Examples of the imidazole-based curing accelerator include 2-methylimidazole, 2-phenylimidazole, and 2-ethyl-4-methylimidazole. Examples of the phosphorus-based curing accelerator include triphenylphosphine and tetraphenylphosphonium tetraphenylborate. Examples of the amine-based curing accelerator include triethylamine and benzyldimethylamine. One of these may be used alone, or two or more may be used in combination.

Examples of the curing agent when a diallyl phthalate resin is used as the thermosetting resin include organic peroxides. Examples of the organic peroxide include benzoyl peroxide, dicumyl peroxide, di-t-butyl peroxide, t-butylperoxy-2-ethylhexyl monocarbonate, t-butyl peroxybenzoate, t-hexylperoxy-2-ethylhexanoate, and 1,1-di-t-butylperoxy-3,3,5-trimethylcyclohexane. One of these may be used alone, or two or more may be used in combination.

For the thermosetting resin composition containing a curing agent, the content of the curing agent is not particularly limited but may be, for example, from 0.01 to 20 parts by mass or from 0.01 to 10 parts by mass relative to 100 parts by mass of a thermosetting resin A. A curing agent used in such a range provides better printability and storage stability.

To the thermoplastic resin composition may be added within a range not impairing the intended properties a thermosetting resin; an antioxidant; a tackifier; a stabilizer, such as a thermal stabilizer; a hydrolysis resistance improver; a weather resistant stabilizer; a matting agent; an ultraviolet absorber; a nucleating agent; a plasticizer; a dispersant; a flame retardant; an antistatic agent; a coloration inhibitor; an anti-gelling agent; a colorant; a release agent; or the like. Details can be considered with reference to the matters described in JP 4894982 B and JP 6645777 B, the contents of which are incorporated by reference into the present specification.

Winding

A winding of the present invention is a winding in which the filament for a 3D printer described above is wound around a core material. The winding of the present invention is attached to a 3D printer, and the filament for a 3D printer is drawn from the winding for use in producing a 3D shaped object in a 3D printer.

Examples of the material for the core material include paper, resin, and metal, and the material is not particularly limited. The diameter of the core material can be appropriately selected according to the type of 3D printer. From the viewpoint, such as strength, the material is preferably 100 mm or more, more preferably 200 mm or more, and even more preferably 300 mm or more. The upper limit can be 1000 mm or less and can also be 1500 mm or less.

The winding length of the filament for a 3D printer in the winding varies according to the shape or size of the filament for a 3D printer but is preferably 3 m or longer, more preferably 5 m or longer, and even more preferably 10 m or longer.

Method for producing filament for 3D printer

The filament for a 3D printer of the present invention can be produced through impregnating a continuous reinforcing fiber with a thermosetting resin composition containing a thermosetting resin. Examples of the continuous reinforcing fiber and the thermosetting resin composition include those described above.

For a thermosetting resin composition with properties not suitable for impregnation at room temperature, the thermosetting resin composition may be heated to increase the fluidity to have a viscosity suitable for impregnation for use or may be diluted with a solvent to have a viscosity suitable for impregnation and used as a resin solution.

For the solvent used for preparation of the resin solution, any solvent that dissolves the thermosetting resin is preferably used. Specific examples of the solvent include polar solvents, such as ketones including acetone, methyl ethyl ketone, and methyl isobutyl ketone; alcohols including methanol and isopropanol; Cellosolve-based solvents including propylene glycol monomethyl ether and propylene glycol monomethyl ether acetate; ester-based solvents including ethyl lactate, methyl acetate, ethyl acetate, butyl acetate, isoamyl acetate, methyl methoxypropionate, and methyl hydroxyisobutyrate; and amides including dimethylacetamide and dimethylformamide; and non-polar solvents, such as aromatic hydrocarbons including toluene and xylene. The boiling point of the solvent is preferably from 30 to 160°C. The solvent with a boiling point in the above range is easy to remove in the drying. The upper limit is preferably 150°C or lower, more preferably 100°C or lower, and even more preferably 80°C or lower. The lower limit is 35°C or higher, more preferably 40°C or higher, and even more preferably 50°C or higher.

The content of the thermosetting resin in the resin solution is preferably 20 mass% or higher, more preferably 25 mass% or higher, even more preferably 30 mass% or higher, still more preferably 40 mass% or higher, and particularly preferably 50 mass% or higher.

The temperature of the resin solution is preferably from 10 to 50°C, more preferably from 10 to 40°C, even more preferably from 10 to 35°C, still more preferably from 15 to 30°C, still even more preferably from 20 to 30°C, and particularly preferably from 20 to 25°C.

The viscosity of the resin solution at 25°C is preferably from 1 to 2000 mPa·s. The lower limit can be 5 mPa·s or higher or can be 50 mPa·s or higher. The upper limit can be 1500 mPa·s or lower, can be 1200 mPa·s or lower, or can be 1000 mPa·s or lower. A preferred aspect of the viscosity of the resin solution at 25°C includes an aspect of the viscosity from 5 to 1500 mPa·s. In addition, another preferred aspect of the viscosity of the resin solution at 25°C includes an aspect of the viscosity of 50 to 1200 mPa·s. Furthermore, another preferred aspect of the viscosity of the resin solution at 25°C includes an aspect of the viscosity from 1 to 1000 mPa·s.

Before impregnating the continuous reinforcing fiber with the thermosetting resin composition, opening treatment, pre-heat treatment, or sizing treatment may be performed on the continuous reinforcing fiber. Performing such treatment can increase the impregnability of the thermosetting resin composition.

The method of impregnating the continuous reinforcing fiber with the thermosetting resin composition is not particularly limited, and a known method can be employed. Examples include a method in which the continuous reinforcing fiber is immersed in the thermosetting resin composition while the continuous reinforcing fiber is being drawn, and the continuous reinforcing fiber is impregnated with the thermosetting resin composition.

After impregnated with the thermosetting resin composition, the continuous reinforcing fiber is also preferably heated to remove the solvent, to remove adhesion at ordinary temperature by promoting a curing reaction of the thermosetting resin composition, or to adjust printability by promoting a curing reaction of the thermosetting resin composition. The heating temperature is not particularly limited but is preferably from 70 to 300°C, more preferably from 90 to 250°C, and even more preferably from 100 to 200°C. The heating time is not particularly limited but is, from the viewpoint of productivity, preferably from 1 to 270 seconds, more preferably from 1 to 180 seconds, and even more preferably from 1 to 120 seconds. In addition, the heating if performed is preferably performed under conditions where the thermosetting resin is not completely cured.

The filament for a 3D printer of the present invention can be thus produced. The filament for a 3D printer thus produced is then wound around a core material, and the winding of the present invention described above can be produced accordingly.

Method for producing formed article

A method for producing a formed article of the present invention is characterized in that the filament for a 3D printer of the present invention described above (hereinafter also referred to simply as a "filament") is discharged from a nozzle of a 3D printer onto a substrate to produce a 3D shaped object, and this 3D shaped object is heated.

For the 3D printer, any 3D printer for a shaping method by a material extrusion deposition method is preferably used.

In producing a 3D shaped object, the filament is preferably discharged with one end fixed to the substrate. When the filament is discharged, the substrate may be moved to laminate the filament to form a desired shape, the nozzle may be moved to laminate the filament, or both the substrate and the nozzle may be moved to laminate the filament. From the viewpoint of improving productivity, the nozzle is preferably moved to laminate the filament.

In addition, the distance between the tip of the nozzle and the base may be short (e.g., 3 mm or shorter) or may be long (e.g., longer than 5 mm), but with the short distance, the method can further improve tracking properties of the filament. The discharging rate is not particularly limited, but can be, for example, from 0.5 to 100 mm/sec, can be from 1 to 50 mm/sec, can be from 1 to 20 mm/sec, or can be from 1 to 10 mm/sec. In addition, when the discharging rate is increased, the rate can be higher than 20 mm/sec and 100 mm/sec or lower.

When the filament is discharged from the nozzle, the filament is preferably heated and discharged. The heating temperature of the filament can be appropriately determined according to the type of thermosetting resin and is preferably not lower than the softening point of the thermosetting resin contained in the filament and not higher than the softening point + 150°C and more preferably within the softening point of + 120°C. In addition, the filament is heated preferably in the nozzle.

To improve printability, the substrate is also preferably heated in forming a 3D shaped object. The heating temperature of the substrate is preferably from 20 to 150°C, more preferably from 20 to 130°C, and even more preferably from 20 to 100°C.

In producing a 3D shaped object, a support material for supporting a space portion of the 3D shaped object may be used.

In the method for producing a formed article of the present invention, after the 3D shaped object is produced, the 3D shaped object is heated. The curing of the thermosetting resin is completed by heating, and a formed article with excellent mechanical properties is obtained. The heating temperature of the 3D shaped object can be appropriately determined according to the type of thermosetting resin. The heating temperature is preferably from 50 to 400°C and more preferably from 100 to 350°C. The heating time is not particularly limited but is preferably from 10 to 36000 seconds, more preferably from 20 to 14400 seconds, and even more preferably from 30 to 10800 seconds.

The 3D shaped object may be heated under increased pressure. The pressure of the increased pressure can be appropriately determined according to the shape or size of the 3D shaped object. The pressure is, for example, preferably 1 kPa or higher, more preferably 5 kPa or higher, and even more preferably 100 kPa or higher. The upper limit is preferably 1000000 kPa or lower, more preferably 500000 kPa or lower, and even more preferably 100000 kPa or lower.

The formed article obtained by the present invention will be widely used in fiber-reinforced resin formed articles. The fields of application are not particularly limited, and the formed article of the present invention will be widely used in applications, such as components for transportation equipment components, such as those of automobiles; general mechanical components; precision mechanical components; electronic and electrical equipment components; OA equipment components; building materials and housing-related components; medical devices; leisure sporting goods; playing

tools; medical supplies; articles for daily use, such as food packaging films, and defense and aerospace products. In addition, the formed article of the present invention is also preferably used in prototypes of these.

Examples

Hereinafter, the present invention will be described more specifically through examples, but the present invention is not limited by these examples.

Example 1

A resin solution was prepared by mixing 75 parts by mass of a cyanate resin (TA-1500, available from Mitsubishi Gas Chemical Company, Inc., a solid thermosetting resin at 25°C with a weight average molecular weight of 3824), 0.05 parts by mass of a catalyst (zinc bisoctanoate), and 25 parts by mass of methyl ethyl ketone. The viscosity of the resin solution at 25°C was 543 mPa·s.

Each fiber was drawn from a winding of a carbon fiber (the number of single fibers of 6000 and an average fiber diameter of single fibers of 4 to 7 μm) with a length of 1 m or longer, opened by mechanically applying tension while the fiber is being passed through a plurality of guides, introduced into a bath with a width of 80 mm and a length of 100 mm filled with the resin solution at 25°C, and drawn from the bath at a rate of 100 mm/min. The filament drawn from the bath was sandwiched between two rubber rollers to squeeze out the excess resin, then heated at 160°C for 20 seconds, and a filament was produced. In this filament, the volume content of the carbon fiber used as the continuous reinforcing fiber was 55 vol.%. In addition, the shape of the cross-sectional surface in the direction orthogonal to the length direction of this filament was flattened. Furthermore, the thermosetting resin in the filament was in an uncured state.

Example 2

A filament was produced in the same manner as in Example 1 except for using a resin solution prepared by mixing 75 parts by mass of a naphthol aralkyl type cyanate resin (available from Mitsubishi Gas Chemical Company, Inc., a solid thermosetting resin at 25°C with a weight average molecular weight of 600), 0.05 parts by mass of a catalyst (zinc bisoctanoate), and 25 parts by mass of methyl ethyl ketone. The viscosity of the resin solution at 25°C was 450 mPa·s. In this filament, the volume content of the carbon fiber used as the continuous reinforcing fiber was 55 vol.%. In addition, the shape of the cross-sectional surface in the direction orthogonal to the length direction of this filament was flattened. Furthermore, the thermosetting resin in the filament was in an uncured state.

Example 3

A filament was produced in the same manner as in Example 1 except for using a resin solution prepared by mixing 75 parts by mass of a bismaleimide triazine resin (product name BT-2170, available from Mitsubishi Gas Chemical Company, Inc., a solid thermosetting resin at 25°C with a weight average molecular weight of 2100), 0.05 parts by mass of a catalyst (zinc bisoctanoate), and 25 parts by mass of methyl ethyl ketone. The viscosity of the resin solution at 25°C was 550 mPa·s. In this filament, the volume content of the carbon fiber used as the continuous reinforcing fiber was 50 vol.%. In addition, the shape of the cross-sectional surface in the direction orthogonal to the length direction of this filament was elliptical. Furthermore, the thermosetting resin in the filament was in an uncured state.

Example 4

A filament was produced in the same manner as in Example 1 except for using a resin solution prepared by mixing 67 parts by mass of a phenolic resin (product name BRM-416T, available from Aica Kogyo Co., Ltd., a solid thermosetting resin at 25°C with a weight average molecular weight of 2880) and 33 parts by mass of methanol. The viscosity of the resin solution at 25°C was 476 mPa·s. In this filament, the volume content of the carbon fiber used as the continuous reinforcing fiber was 48 vol.%. In addition, the shape of the cross-sectional surface in the direction orthogonal to the length direction of this filament was elliptical. Furthermore, the thermosetting resin in the filament was in an uncured state.

Example 5

A filament was produced in the same manner as in Example 1 except for using a resin solution prepared by mixing 67 parts by mass of a benzoxazine resin (product name P-d type Benzoxazine, available from Shikoku Chemicals, a solid thermosetting resin at 25°C with a weight average molecular weight of 440) and 33 parts by mass of methyl ethyl

ketone. The viscosity of the resin solution at 25°C was 1203 mPa·s. In this filament, the volume content of the carbon fiber used as the continuous reinforcing fiber was 48 vol.%. In addition, the shape of the cross-sectional surface in the direction orthogonal to the length direction of this filament was elliptical. Furthermore, the thermosetting resin in the filament was in an uncured state.

Example 6

A filament was produced in the same manner as in Example 1 except for using a bismaleimide triazine resin (product name BT-2160, available from Mitsubishi Gas Chemical Company, Inc., a semi-solid thermosetting resin at 25°C with a weight average molecular weight of 1200) by heating to 120°C. The viscosity at 120°C was 100 mPa·s. In this filament, the volume content of the carbon fiber used as the continuous reinforcing fiber was 50 vol.%. In addition, the shape of the cross-sectional surface in the direction orthogonal to the length direction of this filament was elliptical. Furthermore, the thermosetting resin in the filament was in an uncured state.

Example 7

An isobutyl alcohol-modified melamine resin (product name Melan 265, available from Hitachi Chemical Company, Ltd., a liquid thermosetting resin at 25°C with a weight average molecular weight of 5130) was used as the resin solution. The viscosity at 25°C was 550 mPa·s. Each fiber was drawn from a winding of a carbon fiber (the number of single fibers of 6000 and an average fiber diameter of single fibers of 4 to 7 μm) with a length of 1 m or longer, opened by mechanically applying tension while the fiber is being passed through a plurality of guides, introduced into a bath with a width of 80 mm and a length of 100 mm filled with the resin solution at 25°C, and drawn from the bath at a rate of 100 mm/min. The filament drawn from the bath was sandwiched between two rubber rollers to squeeze out the excess resin, then heated at 100°C for 20 seconds, and a filament was produced. In addition, the thermosetting resin in the filament was in an uncured state.

Example 8

An isobutyl alcohol-modified melamine resin (product name Melan 265, available from Hitachi Chemical Company, Ltd., a liquid thermosetting resin at 25°C with a weight average molecular weight of 5130) was used as the resin solution. The viscosity at 25°C was 550 mPa·s. Each fiber was drawn from a winding of a carbon fiber (the number of single fibers of 6000 and an average fiber diameter of single fibers from 4 to 7 μm) with a length of 1 m or longer, opened by mechanically applying tension while the fiber is being passed through a plurality of guides, introduced into a bath with a width of 80 mm and a length of 100 mm filled with the resin solution at 25°C, and drawn from the bath at a rate of 100 mm/min. The filament drawn from the bath was sandwiched between two rubber rollers to squeeze out the excess resin, then heated at 250°C for 100 seconds, and a filament was produced.

Example 9

A resin solution was prepared by mixing 50 parts by mass of a cyanate resin (TA-1500, available from Mitsubishi Gas Chemical Company, Inc., a solid thermosetting resin at 25°C with a weight average molecular weight of 3824), 0.05 parts by mass of a catalyst (zinc bisoctanoate), and 50 parts by mass of methyl ethyl ketone. The viscosity of the resin solution at 25°C was 9 mPa·s.

Each fiber was drawn from a winding of a carbon fiber (the number of single fibers of 6000 and an average fiber diameter of single fibers from 4 to 7 μm) with a length of 1 m or longer, opened by mechanically applying tension while the fiber is being passed through a plurality of guides, introduced into a bath with a width of 144 mm and a length of 240 mm filled with the resin solution at 25°C, and drawn from the bath at a rate of 200 mm/min. The filament drawn from the bath was heated at 180°C for 18 seconds, and a filament was produced. In this filament, the volume content of the carbon fiber, the continuous reinforcing fiber, was 55 vol.%. In addition, the shape of the cross-sectional surface in the direction orthogonal to the length direction of this filament was flattened. Furthermore, the thermosetting resin in the filament was in an uncured state.

Example 10

A filament was produced in the same manner as in Example 1 except for using a resin solution prepared by mixing 50 parts by mass of a benzoxazine resin (product name P-d type Benzoxazine, available from Shikoku Chemicals, a solid thermosetting resin at 25°C with a weight average molecular weight of 440) and 50 parts by mass of methyl ethyl ketone. The viscosity of the resin solution at 25°C was 8 mPa·s. In this filament, the volume content of the carbon fiber

used as the continuous reinforcing fiber was 50 vol.%. In addition, the shape of the cross-sectional surface in the direction orthogonal to the length direction of this filament was elliptical. Furthermore, the thermosetting resin in the filament was in an uncured state.

Measurement of tack

The tack value of the filament was measured by the following method.

Test conditions

Probe diameter: 10 mm in diameter
Probe pressing load: 20 kPa
Probe pressing time: 30 seconds
Probe pressing rate: 30 mm/min
Probe lifting rate: 10 mm/min

Procedures

1) Aligned filaments are fixed to a sample stage of which temperature is adjusted to 23°C, 35°C, 100°C, or 150°C. When the size of the filament is smaller than the probe diameter, a plurality of filaments is aligned without gaps to have a size of 10 mm x 10 mm and fixed to the sample stage.
2) A probe is pressed against the filament on the sample stage at a pressing rate of 30 mm/min to apply a load of 20 kPa and kept pressing for 30 seconds.
3) The probe is lifted at a lifting rate of 10 mm/min.
4) A maximum value of the adhesion when the probe is lifted is taken as the adhesion peak, and an average value of the adhesion peak obtained by measuring a total of three times is taken as the tack value.

[Table 1]

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Tack value at 23°C (kPa) | 0.44 | 0.47 | 1.17 | 1.02 | 0.88 | 0.55 | 3.89 | 0.45 | 0.52 | 0.45 |
| Tack value at 35°C (kPa) | 0.43 | 0.59 | 2.05 | 1.21 | 1.21 | 0.65 | - | 0.44 | 0.61 | 0.59 |
| Tack value at 100°C (kPa) | 5.18 | 5.05 | 5.38 | 4.55 | 5.52 | 5.14 | - | 0.46 | 5.22 | 5.65 |
| Tack value at 150°C (kPa) | 5.09 | 4.52 | 7.55 | 7.12 | 5.43 | 5.18 | - | 0.44 | 4.98 | 5.45 |

Example 7 had a high tack value at 23°C, and thus tack values at 35°C, 100°C, and 150°C were not measured.

The filaments of Examples 1 to 10 were solid at 23°C. Of these, the filaments of Examples 1 to 6, 9, and 10 had a small tack value at 23°C and a high tack value at 100°C and 150°C. And the filaments of Examples 1 to 6, 9, and 10 having a tack value at 23°C of 0 to 3 kPa were drawn from the winding more smoothly than the filament of Example 7 having a tack value at 23°C of higher than 3 kPa. In addition, producing a 3D shaped object in a 3D printer using the filament of Example 1 to 6, 9, or 10 enabled prevention of the occurrence of contamination or the like in a 3D printer, such as that in a creel, more than producing a 3D shaped object in a 3D printer using the filament of Example 7. Furthermore, the filaments of Examples 1 to 6, 9, and 10 having tack values at 100°C and 150°C of 3 kPa or higher had better 3D shaping properties in a 3D printer than the filament of Example 8 having tack values at 100°C and 150°C of lower than 3 kPa.

Production of formed article

Production Example 1

The filament of Example 1 to 3, 6, or 9 was set in a 3D printer (available from Velleman), and a portion of the filament was drawn and fixed to a substrate of the 3D printer. The filament was then discharged in parallel onto the substrate at a discharging temperature (heating temperature inside the nozzle) of 190°C and at a discharging rate of 15 mm/sec to give a pitch of 1.0 mm in the width direction, and a layered object with a width of 15 mm and a length of 100 mm was formed. Furthermore, the filament was discharged in layers onto the surface of the layered object to give a pitch of 0.3 mm in the height direction, and a 3D shaped object was obtained. The filament was repeatedly discharged and laminated to make the thickness of the 3D shaped object 2 mm. The resulting 3D shaped object had a thickness of 2 mm, a width of 15 mm, and a length of 100 mm. This 3D shaped object was then heated at 180°C for 30 minutes and heated at 250°C for 2 hours, and a formed article was produced.

Production Example 2

The filament of Example 4, 5, or 10 was set in a 3D printer (available from Velleman), and a portion of the filament was drawn and fixed to a substrate of the 3D printer. The filament was then discharged in parallel onto the substrate at a discharging temperature (heating temperature inside the nozzle) of 120°C and at a discharging rate of 15 mm/sec to give a pitch of 1.0 mm in the width direction, and a layered object with a width of 15 mm and a length of 100 mm was formed. Furthermore, the filament was discharged in layers onto the surface of the layered object to give a pitch of 0.3 mm in the height direction, and a 3D shaped object was obtained. The filament was repeatedly discharged and laminated to make the thickness of the 3D shaped object 2 mm. The resulting 3D shaped object had a thickness of 2 mm, a width of 15 mm, and a length of 100 mm. This 3D shaped object was then heated at 180°C for 30 minutes, and a formed article was produced.

## Claims

1. A filament for a three-dimensional printer, the filament comprising a continuous reinforcing fiber impregnated with a thermosetting resin composition containing a thermosetting resin, the filament having a characteristic of being solid at 25°C.

2. The filament for a three-dimensional printer according to claim 1, having a tack value of 0 to 3 kPa, the tack value being measured with a probe pressing load of 20 kPa at 23°C.

3. The filament for a three-dimensional printer according to claim 1 or 2, wherein a tack value of 3 kPa or higher, the tack value being measured with a probe pressing load of 20 kPa at any temperature from 40 to 250°C.

4. The filament for a three-dimensional printer according to any one of claims 1 to 3, wherein the continuous reinforcing fiber has a volume content from 10 to 80 vol.% in the filament for a three-dimensional printer.

5. The filament for a three-dimensional printer according to any one of claims 1 to 4, wherein the continuous reinforcing fiber has the number of single fibers of 100 or more.

6. The filament for a three-dimensional printer according to any one of claims 1 to 5, wherein the continuous reinforcing fiber is at least one selected from a carbon fiber, a glass fiber, and an aramid fiber.

7. The filament for a three-dimensional printer according to any one of claims 1 to 6, wherein the thermosetting resin has a weight average molecular weight from 200 to 50000.

8. The filament for a three-dimensional printer according to any one of claims 1 to 7, wherein the thermosetting resin has a softening point of 40 to 250°C.

9. The filament for a three-dimensional printer according to any one of claims 1 to 8, wherein the thermosetting resin is solid at 25°C.

10. The filament for a three-dimensional printer according to any one of claims 1 to 9, wherein the thermosetting resin contains at least one selected from a cyanate resin, a bismaleimide triazine resin, a phenolic resin, a benzoxazine resin, an epoxy resin, an unsaturated polyester resin, and a diallyl phthalate resin.

11. The filament for a three-dimensional printer according to any one of claims 1 to 10, wherein a shape of a cross sectional surface in a direction orthogonal to a length direction of the filament is a circular shape, a flattened shape, or an elliptical shape.

12. A winding, in which the filament for a three-dimensional printer described in any one of claims 1 to 11 is wound around a core material.

13. A method for producing the filament for a three-dimensional printer described in any one of claims 1 to 11, the method comprising impregnating a continuous reinforcing fiber with a thermosetting resin composition containing a thermosetting resin.

14. A method for producing a formed article, the method comprising allowing the filament for a three-dimensional printer described in any one of claims 1 to 11 to be discharged from a nozzle of a three-dimensional printer onto a substrate, so as to produce a three-dimensional shaped object, and heating the three-dimensional shaped object.

## INTERNATIONAL SEARCH REPORT

International application No.
PCT/JP2020/031383

A. CLASSIFICATION OF SUBJECT MATTER
B29K 101/10(2006.01)n; B29K 105/08(2006.01)n; B29C 64/118(2017.01)i; B29C 64/259(2017.01)i; B29C 64/314(2017.01)i; B29C 70/16(2006.01)i; B29C 70/40(2006.01)i; B33Y 40/00(2020.01)i; B33Y 70/00(2020.01)i
FI: B29C64/118; B33Y70/00; B29C64/259; B29C64/314; B33Y40/00; B29C70/16; B29C70/40; B29K101: 10; B29K105:08

According to International Patent Classification (IPC) or to both national classification and IPC

B. FIELDS SEARCHED

Minimum documentation searched (classification system followed by classification symbols)
B29K101/10; B29K105/08; B29C64/118; B29C64/259; B29C64/314; B29C70/16; B29C70/40; B33Y40/00; B33Y70/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/126476 A1 (MITSUBISHI GAS CHEMICAL CO., INC.) 27 July 2017 (2017-07-27) | 1-14 |
| A | JP 2018-94746 A (THE DOSHISHA) 21 June 2018 (2018-06-21) | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 October 2020 (23.10.2020) | 02 November 2020 (02.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/031383

| Patent Documents referred in the Report | Publication Date | Patent Family | Publication Date |
|---|---|---|---|
| WO 2017/126476 A1 | 27 Jul. 2017 | JP 2017-128072 A<br>EP 3409452 A1<br>CA 3011927 A<br>CN 1084 72866 A<br>KR 10-2018-0105650 A<br>RU 2018130063 A<br>TW 201739600 A | |
| JP 2018-94746 A | 21 Jun. 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016518267 T
- JP 2016520459 T
- JP 4894982 B
- JP 6645777 B